# EUROPÄISCHE PATENTSCHRIFT

(11) **EP 0 836 777 B1**
(45) Veröffentlichungstag und Bekanntmachung des Hinweises auf die Patenterteilung: **22.09.2004**
(21) Anmeldenummer: 96921875.9
(22) Anmeldetag: 01.07.1996
(51) Int. Cl.: H04L 12/46, H04Q 11/04

(54) **EINRICHTUNG (IWF) ZUM BIDIREKTIONALEN VERBINDEN EINES ELAN UND EINES CLS-WEITVERKEHRSNETZES**
ARRANGEMENT (IWF) FOR THE BIDIRECTIONAL CONNECTION OF AN ELAN AND A CLS WIDE-AREA NETWORK
DISPOSITIF (IWF) DE CONNEXION BIDIRECTIONNELLE D'UN ELAN ET D'UN RESEAU A VASTE ZONE CLS

(30) Priorität: 05.07.1995 DE 19524504; 28.09.1995 DE 19536200
(43) Veröffentlichungstag der Anmeldung: 22.04.1998
(73) Patentinhaber: SIEMENS AKTIENGESELLSCHAFT, 80333 München (DE)
(72) Erfinder: KARAPETKOV, Stefan, Santa Clara, CA 95051 (US); FROMM, Ingrid, D-81477 München (DE); PETRI, Bernhard, D-81477 München (DE)
(86) Internationale Anmeldenummer: PCT/DE1996/001168
(87) Internationale Veröffentlichungsnummer: WO 1997/002683

(56) Entgegenhaltungen:
- WO-A-96/06492
- IEEE COMMUNICATIONS MAGAZINE, Bd. 33, Nr. 5, 1.Mai 1995, Seiten 70-85, XP000518773 HONG LINH TRUONG: "LAN EMULATION ON AN ATM NETWORK"
- GLOBECOM'92 COMMUNICATION FOR GLOBAL USERS, INCLUDING A COMMUNICATIONS THEORY MINI CONFERENCE ORLANDO, DEC. 6 - 9, 1992, Bd. 1 - 2 - 03, 6.Dezember 1992, INSTITUTE OF ELECTRICAL AND ELECTRONICS ENGINEERS, Seiten 1062-1066, XP000357716 CROCETTI P ET AL: "MULTICAST IN SMDS OVER AN ATM NETWORK"
- ITU-T: "Recommendation I.364" 1993 , INTERNATIONAL TELECOMMUNICATION UNION , CH XP002017311 siehe Absatz 3.2 siehe Absatz 3.3

## Beschreibung

Die Erfindung betrifft eine Einrichtung (IWF) zum bidirektionalen Verbinden eines ELAN und eines einen verbindungslosen Dienst bereitstellenden Weitverkehrsnetzes.

ELAN steht für emuliertes LAN, wie es insbesondere beschrieben ist in der Spezifikation 94-0035R9, "LAN Emulation Over ATM: Version 1.0" der LAN Emulation SWG Drafting. Group des ATM Forum vom 6. Januar 1995, Editor: Bill Ellington. Hierbei handelt es sich um einen Ansatz des ATM-Forums zurMigration von heutigen LANs zu ATM-Netzen. ATM bedeutet hierbei "Asynchronus Transfer Mode", also asynchrones Daten- bzw. Informationsübertragungsverfahren. LAN ist eine Abkürzung von "Local Area Network". Bei LANs handelt es sich um datagrammorientierte Lokalnetze, die u.a. in dem Artikel von David D. Clark, Kenneth D. Progran und David P. Reed, "An Introduction to Local Area Networks" in Proceedings of the IEEE, Vol. 66, No. 11, November 1978 auf den Seiten 1497 bis 1517 beschrieben sind. LANs bieten einen verbindungslosen Dienst, den sogenannten MAC-Service, an. MAC steht hierbei für "Media Access Control". Im Gegensatz zu diesem verbindungslosen Dienst ist die ATM-Technologie verbindungsorientiert. Sollen die für LANs entwickelten Protokolle der höheren Schichten in auf der Basis eines ATM-Netzes emulierten LANs benutzt werden, müssen in diesem ATM-Netz die Eigenschaften des verbindungslosen MAC-Dienstes erbracht werden. Die LAN-Emulation gemäß der obengenannten Spezifikation realisiert den MAC-Dienst im lokalen ATM-Netz und definiert damit ein einzelnes emuliertes LAN, im folgenden ELAN genannt. In diesem ELAN können die üblichen LAN-Protokolle wie LLC, TCP/IP, SPX/IPX oder TP/CLNP benutzt werden.

Die.LAN-Emulation unterstützt die beiden am häufigsten verwendeten LAN-Standards, nämlich Ethernet gemäß IEEE 802-3 und Token-Ring gemäß IEEE 802.5, wobei bei Token-Ring drei Rahmenlängen unterstützt werden. Die Wegelenkung eines Informationspaketes innerhalb eines Ethernet erfolgt anhand einer von einer höheren Schicht übergebenen Ziel-MAC-Adresse. Token-Ring-LANs verwenden zur Beschreibung des Informationsweges sogenannte Route Descriptors im Rahmenkopf. Anhand eines solchen Descriptors kann der Rahmen zum Ziel befördert werden.

Im folgenden wird unter MAC-Adresse eine Adresse innerhalb eines LAN verstanden, die in einem Token-Ring dem Route Descriptor und in einem Ethernet der MAC-Adresse entspricht.

Zur Emulation eines LAN in einem ATM-Netz muß die LAN-Emulation u.a. Ziel-MAC-Adressen in Ziel-ATM-Adressen auflösen, Multicast und Broadcast realisieren, also eine Verteilung von Information an mehrere oder an alle Teilnehmer, sowie die Übertragung von LAN-Emulation-Rahmen in der richtigen Reihenfolge sicherstellen. Die LAN-Emulation hat eine Client-Server-Konfiguration. Die Clienten-Seite wird LAN-Emulation-Client LEC genannt und die Server-Seite wird LAN-Emulation-Service genannt. Der LAN-Emulation-Service besteht aus LAN-Emulation-Server LES, Broadcast and Unknown Server BUS und LAN-Emulation-Configration-Server LECS. Der LEC bekommt von einer übergeordneten Schicht, beispielsweise der LLC-Schicht, die Ziel-MAC-Adresse und muß die entsprechende ATM-Adresse finden, um daraufhin den Aufbau einer direkte ATM-Verbindung zum Ziel durch Signalisierung zu veranlassen. Die Signalisierung kann hierbei beispielsweise nach der ITU-T-Empfehlung Q.2931/Q.2971 erfolgen. Ein LEC kann ein Softwaretreiber sein, der auf allen Stationen installiert werden muß, die direkt an das ATM-Netz angeschaltet sind, also durch eine ATM-Hardwareschaltung mit einem ATM-Switch verbunden sind. Ein LEC kann aber auch innerhalb dieser ATM-Hardwareschaltung realisiert sein.

.Ein LES unterhält eine Tabelle mit allen MAC-Adressen, die im emulierten LAN beispielsweise im Rahmen einer Konfigurierung angemeldet sind und mit den entsprechenden ATM-Adressen. Zwischen den LECen und dem LES erfolgt die Kommunikation nach einem LAN-Emulation-Adressenauflösungsprotokoll, das entsprechend der englischen Bezeichnung LAN Emulation Address Resolution Protocoll mit LE_ARP bezeichnet wird. Kennt ein LEC die Ziel-ATM-Adresse einer Ziel-MAC-Adresse nicht, so sendet er eine Anfrage mit der Ziel-MAC-Adresse an den LES. Eine solche Anfrage zur Adreßauflösung wird mit LE_ARP Request bezeichnet. Falls der LES die Ziel-ATM-Adresse auflösen kann, antwortet er mit LE_ARP Response. Wenn nicht, schickt er die Anfrage an weitere LECen.

Erhält ein LEC eine Adreßauflösungsantwort LE_ARP Response, so baut er zu der hierin enthaltenen ATM-Adresse eine ATM-UBR-Verbindung auf und sendet einen Unicast-Rahmen. UBR bedeutet hierbei "Unspecified Bit Rate", gibt also an, daß die Bitrate nicht festgelegt ist. Ein Unicast-Rahmen ist ein Informations- bzw. Datenpaket mit einem einzigen Adressaten. Bei der Übertragung von Rahmen innerhalb eines ELAN wird zwischen Unicast-Rahmen an einen Empfänger und Multicast- oder Broadcast-Rahmen an mehrere oder alle Empfänger unterschieden. Eine ATM-UBR-Verbindung bleibt ab dem letzten gesendeten Rahmen für 20 Minuten bestehen, damit weitere Rahmen auf einfache Weise zum selben Empfänger geschickt werden können. Hierzu wird auf die Variable C12 in Punkt 5.1.1 der LAN-Emulation-Spezifikation verwiesen. Im LEC werden mit Hilfe eines Cash-Mechanismus die Ziel-ATM-Adressen von Ziel-MAC-Adressen eine bestimmte Zeit lang gespeichert. Falls keine Verbindung zu einem Ziel-LEC besteht, die Ziel-ATM-Adresse jedoch im Sender-LEC bekannt ist, kann ein Sender-LEC eine Verbindung ohne Adreßauflösungsanfrage aufbauen und einen Unicast-Rahmen senden.

Multicast-Rahmen an eine Gruppe von Teilnehmern bzw. LECen und Broadcast-Rahmen an alle Teilnehmer bzw. LECen werden an den obengenannten BUS geschickt. Der BUS unterhält Verbindungen zu allen LECen in seinem emulierten LAN und verteilt die angekommenen Rahmen an die Adressaten.

Jeder LEC kann bei der Konfigurierung als sogenannter Proxy-LEC angemeldet werden. Ein Proxy-LEC erhält alle Adreßauflösungsanfragen LE_ARP Request, die ein LES nicht auflösen kann. Außerdem erhält ein Proxy-LEC alle Multicast- und Broadcast-Rahmen.

Der Vorteil der ATM-Technologie ist u.a. darin zu sehen, daß direkte Verbindungen mit flexibler Bandbreite zwischen den Kommunikationspartnern aufgebaut werden können. Solche direkte Verbindungen garantieren minimale Zeitverzögerungen und eine hohe Informationsübertragungsrate. Dieser Vorteil der ATM-Technologie wird in der LAN-Emulation für Unicast-Rahmen genutzt.

Der Connectionless Service oder CLS-Dienst kann mit verschiedenen Technologien (z.B. DQDB, ATM, FR) realisiert werden. Der Dienst wird in der ITU-T Empfehlung F.812 beschrieben.

Bekannte Realisierungen sind der Switched Multi-megabit Data Service (SMDS), beschrieben in Spezifikationen von Bellcore, SMDS Interest Group (SIG) und European SMDS Interest Group (ESIG), sowie der Connectionless Broadband Data Service (CBDS), definiert in ETSI Standard 300 217 und ITU-T Empfehlung I.364. Durch diese Realisierungen fand der CLS weltweit große Verbreitung. Anlagen, die diesen Dienst anbieten, werden von vielen Herstellern im Bereich der Telekommunikation gebaut.

Der Dienst ist für weltweite Datenkommunikation gedacht. Dabei werden jedem Zugang zum CLS-Netz eine oder mehrere CLNAP-Adressen nach E.164 ( E.164-Adresse) zugeteilt (CLNAP=Connectionless Network Access Protocol).

Einem ankommenden Unicast-Rahmen wird anhand seiner Ziel-MAC-Adresse durch statische oder dynamische Zuordnungstabellen eine Ziel-CLNAP-Adresse ( E.164-Adresse) zugefügt (Einkapseln) und der eingekapselte Rahmen (auch CLS-Paket genannt) wird zu dieser CLNAP-Adresse geleitet.

Zum besseren Verständnis werden im folgenden die Adressen im ELAN Unicast- bzw. Multicast/Broadcast-MAC-Adressen genannt, im CLS-Netz wird dagegen von individuellen und Gruppenadressen gesprochen.

Jedes CLS-Paket wird im CLS-Netz unabhängig von den anderen übertragen. Das Netz sorgt für die richtige Reihenfolge der CLS-Pakete.

Innerhalb des CLS-Netzes werden unter bestimmten Voraussetzungen (siehe prETS 300 478, 300 479) die CLNAP-PDUs in CLNIP-PDUs (CLNIP = Connectionless Network Interface Protocol) eingekapselt.

Die Behandlung von Multicast-Verkehr wird im CLS-Netz in folgender Weise realisiert. Sogenannte Group Address Agents (GAAs) enthalten Tabellen mit den individuellen CLNAP-Adressen, die zu einer CLNAP-Gruppenadresse gehören. Jedes CLS-Paket, das eine Gruppenadresse als Zieladresse hat, wird zum entsprechenden Group Address Agent geleitet. Falls eingekapselt wurde, steht in den Feldern "CLNAP Destination Address" und "CLNIP Destination Address" die gleiche Gruppenadresse.

Der GAA löst die Gruppenadresse des angekommenen CLS-Pakets in individuelle CLNIP-Adressen auf, erzeugt Kopien des ursprünglichen Pakets und fügt jeder Kopie die entsprechende individuelle Adresse als CLNIP-Adresse hinzu.

Das "CLNAP Destination Address" Feld bleibt unverändert, damit der Empfänger die ursprüngliche Gruppenadresse erfahren kann. Die LAN-Emulation beschreibt ein einzelnes emuliertes LAN. Für die Kopplung von ELANs sind zur Zeit keine Lösungen bekannt. Aus Leistungsgründen können die in der LAN-Emulation beschriebenen Mechanismen zur Adressenauflösung und zur Realisierung von Multicast/Broadcast im WAN Bereich nicht einfach übernommen werden.

In dem Artikel "Interconnect Emulated LANs with Wide Area ATM Networks" von Peter T.P. Chang und Bill Ellington, ATM Forum Technical Committee vom 29. November - 2. Dezember 1994 sind verschiedene Konzepte bekannt, lokale ATM-Netze, wie z.B. ELANs über ein Weitverkehrs-ATM-Netz zu verbinden.

In einem ersten Konzept sind hierbei mehrere ELANs an ein Weitverkehrs-ATM-Netz angeschlossen, wobei die Adreßauflösung und die Datenübertragung über einen einzigen LES und einen einzigen BUS vorgenommen werden. Dieses Konzept führt zu einem enormen Verkehrsaufkommen für Steuersignale zur Realisierung lokaler Broadcast-Funktionen. Die Adreßauflösungsverzögerungszeiten in einem solchen Netz sind extrem hoch.

Ein weiteres Konzept sieht vor, ELANs jeweils über Fernsteuerbrücken (Remote Bridges) an ein Weitverkehrs-ATM-Netz anzuschließen. Hierbei sind entweder alle Fernsteuerbrücken über permanente virtuelle Leitungen PVC (Permanent Virtual Circuit) miteinander verbunden oder die Fernbrücken sind unter Verwendung eines Adreßauflösungs-Servers mit Hilfe einer ATM-Signalisierung dynamisch miteinander verbunden. Hierbei sind die Übertragungsmöglichkeiten durch die Übertragungsmöglichkeiten der Fernsteuerbrücken und die Bandbreite der permanenten virtuellen Leitungen zwischen zwei Fernbrücken beschränkt. Die Fernbrücken werden mit Broadcast-Rahmen von Broadcast and Unknown Servern entfernter ELANs überflutet, sofern deren Fernbrücke jeweils nicht die Adresse der den Ziel-MAC-Adressen zugeordneten Fernbrücken kennt.

Ein weiteres Konzept sieht vor, anstelle der Fernbrücken Brouter vorzusehen, eine Mischung aus Brücke und Router. Diese Brouter erfüllen in diesem Fall auf der ELAN-Seite die Funktion einer LAN-Emulations-Brücke und auf der Seite des ATM-Weitverkehrsnetzes die Funktionen eines Routers. Dadurch werden die Broadcast-Probleme reduziert, eine Beschränkung der Übertragungsmöglichkeiten über das ATM-Weitbereichsnetz durch die Übertragungsmöglichkeiten der Brouter und der permanenten virtuellen Leitungen bleibt jedoch bestehen.

Ein weiteres Konzept sieht vor, die LES der einzelnen ELANS sowie die BUS der einzelnen ELANS miteinander durch Direktverbindungen zu verbinden. Dies führt jedoch zu einer großen Anzahl von Direktverbindungen und zu einem hohen Verkehrsaufkommen zwischen den LES und den BUS der einzelnen ELANS. Das Verkehrsaufkommen steigt hierbei linear mit der Anzahl der verbundenen ELANS.

Ein weiteres Konzept sieht vor, die LES der einzelnen ELANS sowie die BUS der einzelnen ELANS über Direktverbindungen an einen übergeordneten LES bzw. einen übergeordneten BUS zu verbinden. Dies führt jedoch ebenfalls zu einer großen Anzahl von Direktverbindungen und zu einem hohen Verkehrsaufkommen. Die Mehrschichtigkeit von BUS und übergeordnetem BUS bzw. LES und übergeordnetem LES führt außerdem zu Zeitverzögerungen.

Alle beschriebenen Konzepte sehen die Koppelung eines ELAN an ein ATM-Netz vor.

Eine Bewertung verschiedener Architektur-Alternativen für LAN-Emulationen über ATM-Netze ist beispielsweise Hong Linh Troung et al.:"LAN Emulation on an ATM Network", IEEE Communications Magazine, Band 33, Nr. 5, 1. Mai 1995, Seite 70-85 zu entnehmen.

Aufgabe der Erfindung ist das Bereitstellen einer Einrichtung zum bidirektionalen Verbinden eines ELAN und eines einen verbindungslosen Dienst bereitstellenden Weitverkehrsnetzes.

Diese Aufgabe wird erfindungsgemäß durch eine Einrichtung mit den in Anspruch 1 angegebenen Merkmalen gelöst. Vorteilhafte Ausgestaltungen der Erfindung sind in den abhängigen Ansprüchen angegeben.

Die der vorliegenden Erfindung zugrundeliegende Aufgabe wird durch vier sich in ihrer Funktionalität geringfügig unterscheidende Varianten der Erfindung gelöst.

Eine erfindungsgemäße Einrichtung zum bidirektionalen Verbinden eines ELAN und eines einen verbindungslosen Dienst bereitstellenden Weitverkehrsnetzes hat einen Adreß-Speicher für einander zugeordnete MAC-Adressen des ELAN und E.164-Adressen des Weitverkehrsnetzes, einen Speicher für eine dem Übergang vom Weitverkehrsnetz zu dieser Einrichtung zugeordneten E.164-Adresse, und eine Steuerung, um von der Schnittstelle zwischen dieser Einrichtung und dem ELAN kommende Rahmen abhängig von bestimmten Bedingungen an die Schnittstelle zwischen dieser Einrichtung und dem Weitverkehrsnetz zu übergeben, wobei jeweils gemeinsam mit dem Rahmen die der Ziel-MAC-Adresse zugehörige E.164- Adresse an die Schnittstelle (SIP-3, CLNAP) zum Weitverkehrsnetz übergeben wird bzw. zu verwerfen, wobei Daten-Rahmen und Adreßauflösungsanfrage-Rahmen, deren Ziel-MAC-Adresse eine lokale Broadcast-MAC-Adresse ist, immer zu verwerfen sind, und um vom Weitverkehrsnetz kommende Rahmen an die Schnittstelle zum ELAN zu übergeben.

Die Steuerung einer ersten erfindungsgemäßen Einrichtung ist darüber hinaus ausgestaltet, um Adreßauflösungsanfrage-Rahmen LE_ARP_Request und Unicast- sowie Multicast-Daten-Rahmen zu verwerfen, zu deren Ziel-MAC-Adresse im Adreß-Speicher keine zugeordnete E.164-Adresse gespeichert ist, Adreßauflösungsanfrage-Rahmen LE_ARP_Request und Unicast- sowie Multicast-Daten-Rahmen an das Weitverkehrsnetz weiterzuleiten, zu deren Ziel-MAC-Adresse im Adreß-Speicher eine zugeordnete E.164-Adresse gespeichert ist.

Die Steuerung einer zweiten erfindungsgemäßen Einrichtung ist ausgestaltet, um Unicast -sowie Multicast-Daten-Rahmen zu verwerfen, zu deren Ziel-MAC-Adresse im Adress-Speicher keine zugeordnete E.164-Adresse gespeichert ist, Unicast- sowie Multicast-Daten-Rahmen an das Weitverkehrsnetz weiterzuleiten, zu deren Ziel-MAC-Adresse im Adress-Speicher eine zugeordnete E.164-Adresse gespeichert ist, Adreßauflösungsanfrage-Rahmen (LE_ARP_Request) an das Weitverkehrsnetz weiterzuleiten, zu deren Ziel-MAC-Adresse im Adress-Speicher eine zugeordnete E.164-Adresse gespeichert ist, und Adfreßauflösungsanfrage-Rahmen (LE_ARP_Request), zu deren Ziel-MAC-Adresse im Adress-Speicher keine zugeordnete E.164-Adresse gespeichert ist, mit einer allen ELANs zugeordneten E.164-Adresse (globale E.164-Gruppenadresse) an das Weitverkehrsnetz weiterzuleiten.

Die Steuerung einer dritten erfindungsgemäßen Einrichtung ist ausgestaltet, um alle Unicast-Daten-Rahmen zu verwerfen, Multicast-Daten-Rahmen und Adreßauflösungsanfrage-Rahmen (LE_ARP_Request) zu verwerfen, zu deren Ziel-MAC-Adresse im Adress-Speicher keine zugeordnete E.164-Adresse gespeichert ist, und Multicast-Daten-Rahmen und Adreßauflösungsanfrage-Rahmen an das Weitverkehrsnetz weiterzuleiten, zu deren Ziel-MAC-Adresse im Adreß-Speicher eine zugeordnete E.164-Adresse gespeichert ist.

Die Steuerung einer vierten erfindungsgemäßen Einrichtung ist ausgestaltet, um alle Unicast-Daten-Rahmen zu verwerfen, Multicast-Daten-Rahmen zu verwerfen, zu deren Ziel-MAC-Adresse im Adreß-Speicher keine zugeordnete E.164-Adresse gespeichert ist, Multicast-Daten-Rahmen und Adfreßauflösungsanfrage-Rahmen (LE_ARP_Request) an das Weitverkehrsnetz weiterzuleiten, zu deren Ziel-MAC-Adresse im Adress-Speicher eine zugeordnete E.164-Adresse gespeichert ist und Adreßauflösungsanfrage-Rahmen (LE_ARP_Request), zu deren Ziel-MAC-Adresse im Adress-Speicher keine zugeordnete E.164-Adresse gespeichert ist, mit einer allen ELANs zugeordneten E.164-Adresse (globale E.164-Gruppenadresse) an das Weitverkehrsnetz weiterzuleiten.

Vorzugsweise wird ein ELAN an ein einen verbindungslosen Dienst wie z.B. SMDS (Switched Multimegabit Data Service) oder CBDS (Connectionless Broadband Data Service) bereitstellendes CLS-Weitverkehrsnetz angeschlossen, indem ein LEC des ELAN über eine erfindungsgemäße Einrichtung mit einer Kundenanschlußeinrichtung (CPE = Customer Premises Entity) des CLS-Weitverkehrsnetzes verbunden wird.

Bei der erfindungsgemäßen Einrichtung handelt es sich um eine sogenannte "Interworking Function" IWF, die auch mit Übergangsfunktion oder Umsetzungsfunktion bezeichnet wird und zumindest bezüglich der erfindungsspezifischen Funktionalität in der Schicht 2 gemäß OSI-Referenzmodell angeordnet ist. Eine erfindungsgemäßen Einrichtung kann demnach auch als ELAN-CLS-Brücke bezeichnet werden, also als Brückenfunktion (Bridge) zwischen emuliertem LAN und CLS-Netz.

Wie oben erläutert, kann eine einfache Ausführungsform (o.g. erste erfindungsgemäße Einrichtung)einer solchen Brücke vorsehen, daß Adreßauflösungsanfrage-Rahmen und Unicast- sowie Multicast-Daten-Rahmen verworfen werden, falls zu ihrer Ziel-MAC-Adresse im Adress-Speicher keine zugeordnete E.164-Adresse gespeichert ist, daß Adreßauflösungsanfrage-Rahmen und Unicast- sowie Multicast-Daten-Rahmen an das CLS-Weitverkehrsnetz weitergeleitet werden, falls zu ihrer Ziel-MAC-Adresse im Adreß-Speicher eine zugeordnete E.164-Adresse gespeichert ist, und daß Datenrahmen und Adreßauflösungsanfrage-Rahmen, deren Ziel-MAC-Adresse eine lokale Broadcast-MAC-Adresse ist, verworfen werden. Die Umsetzungsfunktion übergibt jeweils gemeinsam mit dem Rahmen die der Ziel-MAC-Adresse zugehörige E.164-Adresse an die Schnittstelle zum CLS-Weitverkehrsnetz. Zumindest zu Adreßauflösungsanfrage-Rahmen übergibt die Umsetzungsfunktion vorzugsweise auch die der Ursprungs-MAC-Adresse zugeordnete E.164-Adresse. Dadurch wird ein späteres Übermitteln von Informationen vom aktuellen Empfänger zum Sender vereinfacht, sofern der Adreß-Speicher der Umsetzungsfunktion einen Cache-Mechanismus hat. Vom CLS-Weitverkehrsnetz kommende Rahmen werden an die Schnittstelle (Schicht LEC) zum ELAN übergeben.

Eine solche IWF eignet sich zur Durchführung eines Verfahrens zum Ermitteln einer Ziel-ATM-Adresse als Antwort auf eine von einem Ursprungs-LAN-Emulation-Client eines ersten ELAN abgegebene Adreßauflösungsanfrage, wenn die aufzulösende Ziel-MAC-Adresse mindestens einem LAN-Emulation-Client eines zweiten ELAN zugeordnet ist. Wenn nämlich der LES des ersten ELAN die Adreßauflösungsanfrage an einen LEC mit Zugang zum CLS-Netz über eine solche IWF übergibt, kann diese Adreßauflösungsanfrage über das CLS-Netz zum ELAN des der Ziel-MAC-Adresse zugeordneten LAN-Emulation-Clienten übertragen werden, um dort aufgelößt zu werden.

Die beschriebene einfache Umsetzungsfunktion sieht vor, daß nur Adreßauflösungsanfragen für solche MAC-Adressen aufgelöst werden können, die gemeinsam mit der zugeordneten E.164-Adresse im Adresspeicher abgelegt sind. Dadurch gelangen nur sicher aufzulösende Adreßauflösungsanfragen in das CLS-Weitverkehrsnetz.

Sollten auch Adreßauflösungsanfragen für solche MAC-Adressen aufgelöst werden können, deren zugeordnete E.164-Adressen nicht im Adresspeicher abgelegt sind, so kann die genannte Umsetzungsfunktion entsprechend der oben erwähnten zweiten und vierten erfindungsgemäßen Einrichtung ausgestaltet sein, um Adreßauflösungsanfrage-Rahmen, zu deren Ziel-MAC-Adresse im Adress-Speicher keine zugeordnete E.164-Adresse gespeichert ist, mit einer allen ELANs zugeordneten E.164-Adresse an das CLS-Weitverkehrsnetz weiterzuleiten. Eine solche Adreßauflösungsanfrage wird dann, beispielsweise vom Gruppenadressen-Agenten GAA des CLS-Weitverkehrsnetzes gesteuert, an alle ELANs geschickt. Da die Adreßauflösungsanfrage-Rahmen klein sind, wird durch diese Maßnahme das CLS-Weitverkehrsnetz nur relativ gering belastet.

Insbesondere um das Versenden von Unicast-Datenrahmen im CLS-Weitverkehrsnetz zu verhindern, deren ATM-Adresse dem Ursprungs-LEC beim Absenden nicht bekannt war und die daher über den Broadcast-and-Unknown-Server als Unknown-Datenrahmen zum Zugangs-LEC gelangen, kann in einer Abwandlung der beschriebenen Umsetzungsfunktion gemäß der oben erwähnten dritten und vierten erfindungsgemäßen Einrichtung vorgesehen sein, alle Unicast-Datenrahmen zu verwerfen. Da der solchen Unicast-Datenrahmen zugeordnete Adreßauflösungsanfrage-Rahmen über das CLS-Weitverkehrsnetz übertragen wird, erhält der Ursprungs-LEC die für einen ATM-Verbindungsaufbau erforderliche ATM-Adresse und kann den Verbindungsaufbau veranlassen. Wenn von einem Sicherungsmechanismus einer höheren Schicht festgestellt wird, daß eine fehlerhafte Übertragung zumindest der Unkwown-Datenrahmen vorliegt, kann eine wiederholte Übertragung über eine ATM-Verbindung erfolgen.

Eine beschriebene Umsetzungsfunktion kann vorzugsweise ausgestaltet sein, um Datenrahmen und Adreßauflösungsanfrage-Rahmen an das Weitverkehrsnetz weiterzuleiten, deren Ziel-MAC-Adresse eine globale Broadcast-MAC-Adresse ist. Die hierzu zugeordnete E.164-Adresse entspricht der oben erwähnten, alle angeschlossene ELANs adressierenden E.164-Adresse. Durch diese Maßnahme ist es möglich, gezielt Broadcast-Rahmen über das Weitverkehrsnetz zu übertragen, obwohl lokale Broadcast-Rahmen verworfen werden.

Vorzugsweise ist bei beschriebenen Umsetzungsfunktionen vorgesehen, jeweils die dem Sender vom Weitverkehrsnetz kommender Rahmen zugeordnete MAC-Adresse sowie die dieser zugeordnete E.164-Adresse im Adreß-Speicher zu speichern. Dadurch wird das gezielte Übertragen von Daten - beispielsweise einer Adreßauflösungs-Antwort - vom Empfänger einer Information - beispielsweise einer Adreßauflösungsanfrage - zum Sender dieser Information über das einen verbindungslosen Dienst bereitstellende Weitverkehrsnetz erleichtert.

Ein erstes Realisierungsbeispiel für die Einbindung einer vorstehend beschriebene Umsetzungsfunktion zwischen ein ELAN und ein einen verbindungslosen Dienst bereitstellendes Weitverkehrsnetz für den Fall, daß der verbindungslose Dienst ein "Switched Multi-megabit Data Service" SMDS ist, und daß das Weitverkehrsnetz zur Realisierung dieses Dienstes ein "Distributed Queue Dual Bus" DQDB ist, kann vorsehen, daß weitverkehrsnetzseitig die Protokollschichten SMDS-Schnittstellenprotokollschicht 1 SIP_1, SMDS-Schnittstellenprotokollschicht 2 SIP_2 und SMDS-Schnittstellenprotokollschicht 3 SIP_3 vorgesehen sind und daß die Umsetzungsfunktion weitverkehrsnetzseitig mit der SMDS-Schnittstellenprotokollschicht 3 SIP_3 kommuniziert.

Hierbei können beispielsweise ELAN-seitig die Protokollschichten Physikalische Schicht PHY, Asynchron-Transfer-Modus-Schicht ATM, Asynchron-Transfer-Modus-Anpassungsschicht-5 AAL5 und LAN-Emulation-Client-Schicht LEC vorgesehen sein, wobei die Umsetzungsfunktion ELAN-seitig mit der LAN-Emulation-Client-Schicht (LEC) kommuniziert.

In einem anderen Beispiel kann der verbindungslose Dienst ein "Switched Multi-megabit Data Service" (SMDS) sein und das Weitverkehrsnetz zur Realisierung dieses Dienstes ein ATM-Netz, wobei weitverkehrsnetzseitig die Protokollschichten Physikalische Schicht PHY, Asynchrone-Transfer-Modus-Schicht ATM, Segmentations-und-Assemblierungs-Subschicht der Asynchron-Transfer-Modus-Anpassungsschicht-3/4 AAL3/4SAR und SMDS-Schnittstellenprotokollschicht 3 SIP_3 vorgesehen sind und wobei die Umsetzungsfunktion weitverkehrsnetzseitig mit der SMDS-Schnittstellenprotokollschicht 3 (SIP_3) kommuniziert.

In einem weiteren Beispiel kann der verbindungslose Dienst ein "Connectionless Broadband Data Service" CBDS sein und das Weitverkehrsnetz zur Realisierung dieses Dienstes ein ATM-Netz, wobei weitverkehrsnetzseitig die Protokollschichten Physikalische Schicht PHY, Asynchron-Transfer-Modus-Schicht ATM, Asynchron-Transfer-Modus-Anpassungsschicht-3/4 AAL3/4 und Verbindungsloses-Netz-Zugriffs-Protokollschicht CLNAP vorgesehen sind und wobei die Umsetzungsfunktion weitverkehrsnetzseitig mit der Verbindungsloses-Netz-Zugriffs-Protokollschicht CLNAP kommuniziert.

Figur 1 zeigt eine Netzkonstellation mit mehreren ELANs, die über ein ATM-Netz und ein CLS-Netz koppelbar sind.

Figuren 2A bis 2C zeigen jeweils einen Protokollstack bei Kopplung von ELANs durch SMDS-Netz bzw. CBDS-Netz.

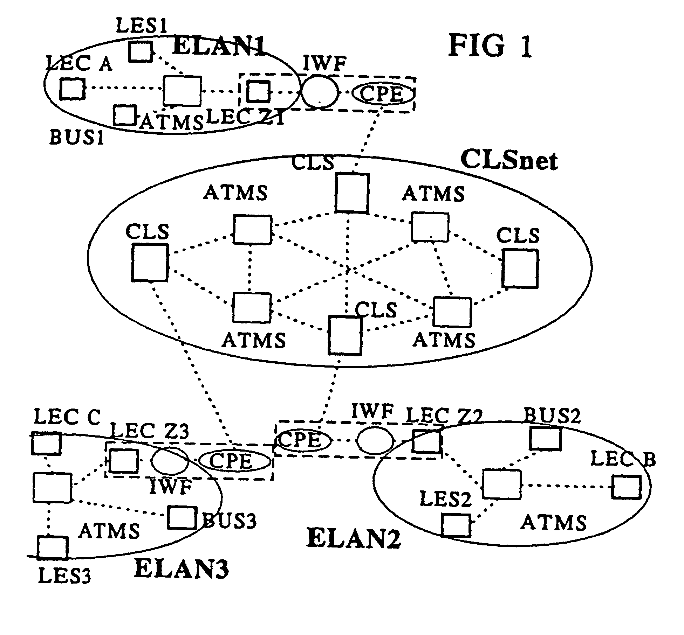

Die Figur 1 zeigt drei ELANs ELAN1, ELAN2 und ELAN3, jeweils mit einem LAN-Emulation-Server LES, einer ATM-Vermittlungseinrichtung ATMS, einem LAN-Emulation-Client LEC A, LEC B, LEC und einem speziellen LAN-Emulation-Client LEC Z1, LEC Z2, LEC Z3, der nachstehend als Zugangs-LEC bezeichnet wird und der dem jeweiligen ELAN ELAN1, ELAN2 bzw. ELAN3 über eine Kundenanschlußeinheit CPE (Customer Premises Equipment) Zugang zu einem ebenfalls dargestellten, einen verbindungslosen Dienst bereitstellenden Netz CLSnet ermöglicht. Hierbei ist jeder Kundenanschlußeinheit CPE als erfindungsgemäße Einrichtung eine Übergangsfunktion (Interworking Function IWF) zugeordnet.

In dem Ausführungsbeispiel gemäß der Figur 1 ist das einen verbindungslosen Dienst bereitstellende Netz CLSnet mit Hilfe eines übergeordneten (räumlich übergeordnet, also regional oder global) ATM-Netzes mit ATM-Vermittlungseinrichtungen ATMS realisiert. Die Realisierungsart des einen verbindungslosen Dienst bereitstellenden Netzes CLSnet hat jedoch keinen Einfluß auf die Erfindung.

In der Figur 1 sind außerdem die Broadcast-and-Unknown-Server BUS1, BUS2, BUS3 des ELAN1, ELAN2 und ELAN3 dargestellt. Wie durch einen übergreifenden Rahmen dargestellt, bilden in dem gezeigten Beispiel jeweils Zugangs-LEC LEC Z1, LEC Z2 bzw. LEC Z3, Umsetzungsfunktion IWF und Kundenanschlußeinrichtung CPE eine Brücke, deren Brückenfunktion die Umsetzungsfunktion IWF ist.

Das einen verbindungslosen Dienst bereitstellende Netz CLSnet enthält einen verbindungslosen Dienst bereitstellende Server (Connectionless Server) CLS und einen Gruppenadreßagenten GAA (Group-Address-Agent).

Die IWF realisiert als erfindungsgemäße Einrichtung die Verbindung zwischen dem "Zugang LEC" einerseits und.dem CLS-Netz andererseits. Die IWF zur Kopplung von ELANs durch das CLS-Netz behandelt MAC- und E.164-Adressen und ist der Schicht 2 nach OSI-Referenzmodell zuzuordnen. Das heißt die IWF ist eine ELAN-CLS-Brücke.

Wenn die IWF auch Routing Funktionen erfüllen soll, kann sie auch Schicht 3 Adressen (z.B. IP, IPX u.s.w.) behandeln. Das ist aber nicht erforderlich.

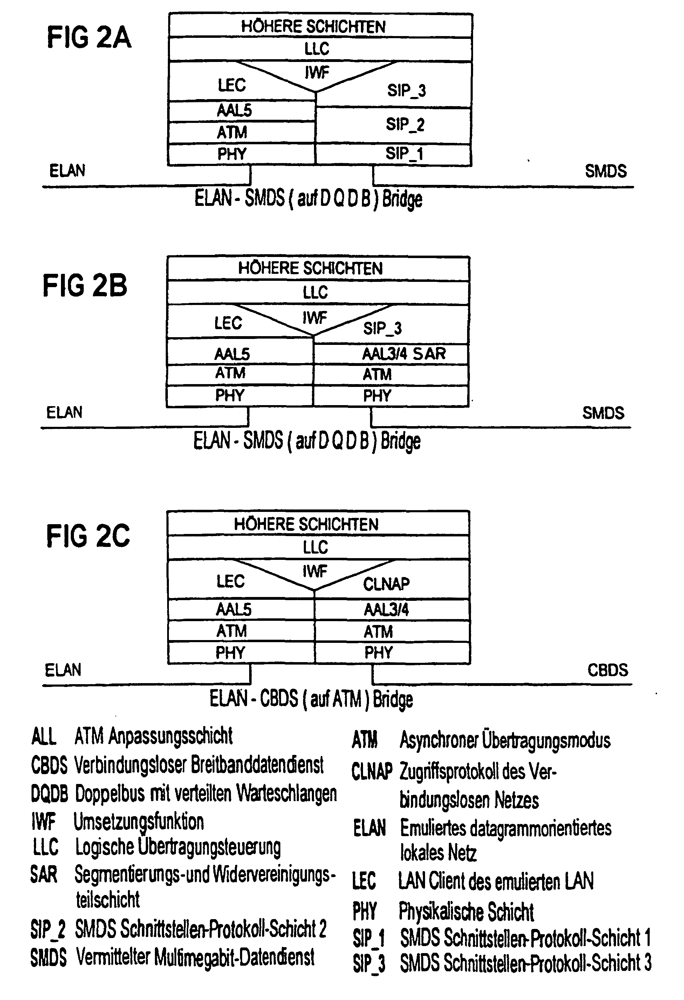

Im Beispiel in Figur 2A, 2B und 2C wird jeweils der Protokollstack für die Kopplung von ELANs durch das SMDS-Netz bzw. durch das CBDS-Netz dargestellt. Der SMDS-Dienst wird in dem Beispiel nach Figur 2A mit der DQDB-Technologie und im Beispiel nach Figur 2B mit der ATM-Technologie realisiert. Der CBDS-Dienst wird in dem Beispiel nach Figur 2C mit der ATM-Technologie realisiert.

Die IWF hat die folgenden Aufgaben:

### I. Bereitstellung der folgenden Parameter:

### I.1. Empfänger-E.164-Adresse

Die IWF muß hierzu eine Tabelle mit MAC-Adressen und den entsprechenden E.164-Adressen unterhalten. Die Einträge in der Tabelle werden beispielsweise per Netzmanagement eingestellt, können aber auch anhand der Sender-MAC-Adresse und Sender-E.164-Adresse der angekommenen CLS-Pakete ausgefüllt werden und nach einer bestimmten Zeit gelöscht werden.

### I.2. Sender-E.164-Adresse

Das ist die E.164-Adresse der IWF.

### II. Behandlung der Rahmen entsprechend der Ziel-MAC-Adresse und dem Rahmentyp in oben angegebener Weise.

Ein erstes Realisierungsbeispiel für die Einbindung einer vorstehend beschriebene Umsetzungsfunktion zwischen einem ELAN und einem einen verbindungslosen Dienst bereitstellenden Weitverkehrsnetz für den Fall, daß der verbindungslose Dienst ein "Switched Multi-megabit Data Service" SMDS ist, und daß das Weitverkehrsnetz zur Realisierung dieses Dienstes ein "Distributed Queue Dual Bus" DQDB ist, kann vorsehen, daß weitverkehrsnetzseitig die Protokollschichten
- SMDS-Schnittstellenprotokollschicht 1, SIP_1,
- SMDS-Schnittstellenprotokollschicht 2, SIP_2, und
- SMDS-Schnittstellenprotokollschicht 3, SIP_3, vorgesehen sind und daß die Umsetzungsfunktion weitverkehrsnetzseitig mit der SMDS-Schnittstellenprotokollschicht 3, SIP_3, kommuniziert.

Hierbei können beispielsweise ELAN-seitig die Protokollschichten
- Physikalische Schicht, PHY,
- Asynchron-Transfer-Modus-Schicht, ATM,
- Asynchron-Transfer-Modus-Anpassungsschicht-5, AAL5, und
- LAN-Emulation-Client-Schicht, LEC,
vorgesehen sein, wobei die Umsetzungsfunktion ELAN-seitig mit der LAN-Emulation-Client-Schicht, LEC, kommuniziert.

In einem anderen Beispiel kann der verbindungslose Dienst ein "Switched Multi-megabit Data Service" (SMDS) sein und das CLS-Weitverkehrsnetz zur Realisierung dieses Dienstes ein ATM-Netz, wobei weitverkehrsnetzseitig die Protokollschichten Physikalische Schicht, PHY, Asynchrone-Transfer-Modus-Schicht, ATM, Segmentations-und-Assemblierungs-Subschicht der Asynchron-Transfer-Modus-Anpassungsschicht-3/4, AAL3/4SAR, und SMDS-Schnittstellenprotokollschicht 3, SIP_3, vorgesehen sind und wobei die Umsetzungsfunktion weitverkehrsnetzseitig mit der SMDS-Schnittstellenprotokollschicht 3, SIP_3, kommuniziert.

In einem weiteren Beispiel kann der verbindungslose Dienst ein "Connectionless Broadband Data Service" CBDS sein und das Weitverkehrsnetz zur Realisierung dieses Dienstes ein ATM-Netz, wobei weitverkehrsnetzseitig die Protokollschichten
- Physikalische Schicht, PHY,
- Asynchron-Transfer-Modus-Schicht, ATM,
- Asynchron-Transfer-Modus-Anpassungsschicht-3/4, AAL3/4, und
- Verbindungsloses-Netz-Zugriffs-Protokollschicht, CLNAP, vorgesehen sind und wobei die Umsetzungsfunktion weitverkehrsnetzseitig mit der Verbindungsloses-Netz-Zugriffs-Protokollschicht, CLNAP, kommuniziert.

Nachstehend werden die Bedeutungen der verwendeten Abkürzungen in Form der Fachbegriffe gemäß den einschlägigen Normen angegeben:
- AAL: ATM Adaptation Layer
- ATM: Asynchronous Transfer Mode
- BUS: Broadcast and Unknown Server
- CBDS: Connectionless Broadband Data Service
- CLNAP: Connectionless Network Access Protocol
- CLNIP: Connectionless Network Interface Protocol
- CLNP: Connectionless Network Protocol
- CLS: Connectionless Service/Server
- CPE: Customer Premises Equipment
- CRC: Cyclic Redundancy Check
- DQDB: Distributed Queue Dual Bus
- DS1: Digital Signal 1
- DS3: Digital Signal 3
- E1: European transmission level 1
- E3: European transmission level 3
- ELAN: Emulated Local Area Network
- ESIG: European SMDS Interest Group
- ETSI: European Telecommunications Standards Institute
- FR: Frame Relay
- GAA: Group-Address-Agent
- IEEE: Institute of Electrical and Electronics Engineers
- IP: Internet Protocol
- IPX: Internetwork Packet Exchange
- ITU-T: International Telecommunications Union-Telecommunications
- IWF: Interworking Function
- L3_PDU: Level 3 Protocol Data Unit
- LAN: Local Area Network
- LE_ARP: LAN Emulation Address Resolution Protocol
- LEC: LAN Emulation Client
- LECS: LAN Emulation Configuration Server
- LES: LAN Emulation Server
- LLC: Logical Link Control
- MAC: Media Access Control
- OSI: Open Systems Interconnection
- PDU: Protocol Data Unit
- PHY: Physical Layer
- SIG: SMDS Interest Group
- SIP_3: SMDS Interface Protocol Layer 3
- SMDS: Switched Multi-megabit Data Service
- SPX: Sequenced Packet Exchange
- TCP: Transmission Control Protocol
- TP: Transport Protocol
- UBR: Unspecified Bit Rate
- WAN: Wide Area Network

## Patentansprüche

1. Einrichtung (IWF) zum bidirektionalen Verbinden eines ELAN und eines einen verbindungslosen Dienst bereitstellenden Weitverkehrsnetzes,
- mit einem Adreß-Speicher für einander zugeordnete MAC-Adressen des ELAN und E.164-Adressen des Weitverkehrsnetzes,
- mit einem Speicher für eine dem Übergang vom Weitverkehrsnetz zu dieser Einrichtung (IWF) zugeordneten E.164-Adresse,
**gekennzeichnet durch** eine Steuerung, die derart ausgestaltet ist, daß
- Unicast- sowie Multicast-Daten-Rahmen verworfen werden, zu deren Ziel-MAC-Adresse im Adreß-Speicher keine zugeordnete E.164-Adresse gespeichert ist,
- Adreßauflösungsanfrage-Rahmen (LE_ARP_Request), zu deren Ziel-MAC-Adresse im Adreß-Speicher keine zugeordnete E.164-Adresse gespeichert ist, verworfen werden oder mit einer allen ELANs zugeordneten E.164-Adresse an das Weitverkehrsnetz weitergeleitet werden,
- Adreßauflösungsanfrage-Rahmen (LE_ARP_Request) und Unicast- sowie Multicast-Daten-Rahmen an das Weitverkehrsnetz weitergeleitet werden, zu deren Ziel-MAC-Adresse im Adreß-Speicher eine zugeordnete E.164-Adresse gespeichert ist,
- Daten-Rahmen und Adreßauflösungsanfrage-Rahmen verworfen werden, deren Ziel-MAC-Adresse eine lokale Broadcast-MAC-Adresse ist, wobei jeweils gemeinsam mit dem Rahmen die der Ziel-MAC-Adresse zugehörige E.164-Adresse an die Schnittstelle (SIP_3, CLNAP) zum Weitverkehrsnetz übergeben wird,
- vom Weitverkehrsnetz kommende Rahmen an die Schnittstelle (LEC) zum ELAN übergeben werden.

2. Einrichtung nach Anspruch 1,
**dadurch gekennzeichnet, daß** die Steuerung derart ausgestaltet ist, daß alle Unicast-Daten-Rahmen verworfen werden und keine Unicast-Daten-Rahmen an das Weitverkehrsnetz weitergeleitet werden, zu deren Ziel-MAC-Adresse im Adreß-Speicher eine zugeordnete E.164-Adresse gespeichert ist.

3. Einrichtung nach Anspruch 1 oder 2,
**dadurch gekennzeichnet, daß** die Steuerung derart ausgestaltet ist, daß Daten-Rahmen und Adreßauflösungsanfrage-Rahmen an das Weitverkehrsnetz weitergeleitet werden, deren Ziel-MAC-Adresse eine globale Broadcast-MAC-Adresse ist.

4. Einrichtung nach einem Ansprüche 1 bis 3,
**dadurch gekennzeichnet, daß** die Steuerung derart ausgestaltet ist, daß jeweils die dem Sender vom Weitverkehrsnetz kommender Rahmen zugeordnete MAC-Adresse sowie die dieser zugeordnete E.164-Adresse im Adreß-Speicher gespeichert werden.

5. Einrichtung nach einem der Ansprüche 1 bis 4,
**dadurch gekennzeichnet, daß** der verbindungslose Dienst ein "Switched Multi-megabit Data Service" (SMDS) ist, daß das Weitverkehrsnetz zur Realisierung dieses Dienstes ein "Distributed Queue Dual Bus" (DQDB) ist, daß weitverkehrsnetzseitig die Protokollschichten SMDS-Schnittstellenprotokollschicht 1, 2 und 3 (SIP_1, SIP_2, SIP_3) vorgesehen sind und daß die Einrichtung (IWF) eine Umsetzungsfunktion ist, die weitverkehrsnetzseitig mit der SMDS-Schnittstellenprotokollschicht 3 (SIP_3) kommuniziert.

6. Einrichtung nach einem der Ansprüche 1 bis 4,
**dadurch gekennzeichnet, daß** der verbindungslose Dienst ein "Switched Multi-megabit Data Service" (SMDS), daß das Weitverkehrsnetz zur Realisierung dieses Dienstes im Asynchron-Transfer-Modus (ATM) überträgt, daß weitverkehrsnetzseitig die Protokollschichten Physikalische Schicht (PHY), Asynchrone-Transfer-Modus-Schicht (ATM), Segmentation-und-Assemblierungs-Subschicht der Asynchron-Transfer-Modus-Anpassungsschicht-3/4 (AAL3/4SAR)und SMDS-Schnittstellenprotokollschicht 3 (SIP_3) vorgesehen sind und daß die Einrichtung (IWF) eine Umsetzungsfunktion ist, die weitverkehrsnetzseitig mit der SMDS-Schnittstellenprotokollschicht 3 (SIP_3) kommuniziert.

7. Einrichtung nach einem der Ansprüche 1 bis 4,
**dadurch gekennzeichnet, daß** der verbindungslose Dienst ein "Connectionless Broadband Data Service" (CBDS) ist, daß das Weitverkehrsnetz zur Realisierung dieses Dienstes im Asynchron-Transfer-Modus (ATM) überträgt, daß weitverkehrsnetzseitig die Protokollschichten Physikalische Schicht (PHY), Asynchrone-Transfer-Modus-Schicht (ATM), Asynchron-Transfer-Modus-Anpassungsschicht-3/4 (AAL3/4)und Verbindungsloses-Netz-Zugriffs-Protokollschicht (CLNAP) vorgesehen sind und daß die Einrichtung (IWF) eine Umsetzungsfunktion ist, die weitverkehrsnetzseitig mit der Verbindungsloses-Netz-zugriffs-Protokollschicht (CLNAP) kommuniziert.

8. Einrichtung nach einem der Ansprüche 1 bis 7,
**dadurch gekennzeichnet, daß** ELAN-seitig die Protokollschichten Physikalische Schicht (PHY), Asynchrone-Transfer-Modus-Schicht (ATM), Asynchron-Transfer-Modus-Anpassungsschicht-5 (AAL5) und LAN-Emulation-Client-Schicht (LEC) vorgesehen sind und daß die Einrichtung (IWF) eine Umsetzungsfunktion ist, die ELAN-seitig mit der LAN-Emulation-Client-Schicht (LEC) kommuniziert.

## Claims

1. Arrangement (IWF) for the bidirectional connection of an ELAN and of a wide area network providing a connectionless service,
- with an address memory for MAC addresses of the ELAN and E.164 addresses of the wide area network assigned to each other,
- with a memory for an E-164 address assigned to the transfer from the wide area network to this arrangement (IWF),
**characterized by** a control system designed in such a way that
- unicast and multicast data frames are rejected, to whose target MAC address there is no assigned E.164 address stored in the address memory,
- address resolution request frames (LE_ARP_Request), to whose target MAC address there is no assigned E.164 address stored in the address memory, are rejected or forwarded to the wide area network with an E.164 address assigned to all ELANs,
- address resolution request frames (LE_ARP_Request) and unicast and multicast data frames, to whose target MAC address there is an assigned E.164 address stored in the address memory, are forwarded to the wide area network
- data frames and address resolution request frames are rejected, whose target MAC address is a local broadcast MAC address, whereby each E.164 address belonging to the target MAC address together with the frame is transferred to the interface (SIP_3, CLNAP) to the wide area network,
- frames coming from the wide area network are transferred to the interface (LEC) to the ELAN.

2. Arrangement according to Claim 1,
**characterized in that** the control system is designed in such a way that all unicast data frames are rejected and no unicast data frames, to whose target MAC address there is an assigned E.164 address stored in the address memory, are forwarded to the wide area network.

3. Arrangement according to Claim 1 or 2,
**characterized in that** the control system is designed in such a way that data frames and address resolution request frames, whose target MAC address is a global broadcast MAC address, are forwarded to the wide area network.

4. Arrangement according to one of the Claims 1 to 3,
**characterized in that** the control system is designed in such a way that respectively the MAC address assigned to the frames coming to the sender from the wide area network and also the E.164 address assigned to this MAC address are stored in the address memory.

5. Arrangement according to one of the Claims 1 to 4,
**characterized in that** the connectionless service is a switched multi-megabit data service (SMDS), that the wide area network for the realization of this service is a distributed queue dual bus (DQDB), that, on the wide area network side, the protocol layers SMDS interface protocol layer 1, 2 and 3 (SIP_1, SIP_2, SIP_3) are provided and that the arrangement (IWF) is a conversion function, which, on the wide area network side, communicates with the SMDS interface protocol layer 3 (SIP_3).

6. Arrangement according to one of the Claims 1 to 4,
**characterized in that** the connectionless service is a switched multi-megabit data service (SMDS), that the wide area network for the realization of this service transmits in the asynchronous transfer mode (ATM), that, on the wide area network side, the protocol layers, physical layer (PHY), asynchronous transfer mode layer (ATM), segmentation and assembly sub-layer of the asynchronous transfer mode adaptation layer 3/4 (AAL3/4SAR) and SMDS interface protocol layer 3 (SIP_3) are provided and that the arrangement (IWF) is a conversion function, which, on the wide area network side, communicates with the SMDS interface protocol layer 3 (SIP_3).

7. Arrangement according to one of the Claims 1 to 4,
**characterized in that** the connectionless service is a connectionless broadband data service (CBDS), **in that** the wide area network for the realization of this service transmits in the asynchronous transfer mode (ATM), **in that**, on the wide area network side, the protocol layers, physical layer (PHY), asynchronous transfer mode layer (ATM), asynchronous transfer mode adaptation layer 3/4 (AAL3/4) and connectionless network access protocol layer (CLNAP) are provided for and **in that** the arrangement (IWF) is a conversion function, which, on the wide area network side, communicates with the connectionless network access protocol layer (CLNAP).

8. Arrangement according to one of the Claims 1 to 7,
**characterized in that**, on the ELAN side, the protocol layers, physical layer (PHY), asynchronous transfer mode layer (ATM), asynchronous transfer mode adaptation layer 5 (AAL5) and LAN emulation client layer (LEC) are provided for and **in that** the arrangement (IWF) is a conversion function, which, on the ELAN side, communicates with the LAN emulation client layer (LEC).

## Revendications

1. Dispositif (IWF) de connexion bidirectionnelle d'un ELAN et d'un réseau à grande distance mettant à disposition un service sans connexion,
- avec une mémoire d'adresses pour des adresses MAC de l'ELAN et des adresses E.164 associée du réseau à grande distance qui sont associées entre elles,
- avec une mémoire pour une adresse E.164 associée à la transition du réseau à grande distance, vers ce dispositif (IWF)
**caractérisé par** une commande, qui est conçu pour que
- des trames de données unicast et multicast pour l'adresse cible MAC desquelles aucune adresse E.164 associée n'est sauvegardée dans la mémoire d'adresses soient rejetées,
- des trames de requête de résolution d'adresse (LE_ARP_Request) pour l'adresse cible MAC desquelles aucune adresse E.164 associée n'est sauvegardée dans la mémoire des adresses soient rejetées ou retransmises au réseau à grande distance avec une adresse E.164 associée qui est associée à tous les ELANs,
- des trames de requête de résolution d'adresse (LE_ARP_Request) ainsi que des trames de données unicast et multicast pour l'adresse cible MAC desquelles une adresse E.164 associée est sauvegardée dans la mémoire des adresses soient retransmises au réseau à grande distance,
- des trames de données et des trames de requête de résolution d'adresse dont l'adresse cible MAC est une adresse broadcast MAC locale soient rejetées, l'adresse E.164 associée correspondant à l'adresse cible MAC étant respectivement transférée collectivement à la trame à l'interface (SIP_3, CLNAP) vers le réseau à grande distance,
- des trames arrivant du réseau à grande distance soient transférées à l'interface (LEC) vers l'ELAN.

2. Dispositif selon la revendication 1, **caractérisé en ce que** la commande est conçue de façon à ce que toutes les trames de données unicast soient rejetées et pour qu'aucune trame de données unicast, pour l'adresse cible MAC desquelles une adresse E.164 associée est sauvegardée dans la mémoire des adresses ne soit retransmise au réseau à grande distance.

3. Dispositif selon l'une quelconque des revendications 1 ou 2, **caractérisé en ce que** la commande est conçue de façon à ce que des trames de données et des trames de requête de résolution d'adresse dont l'adresse cible MAC est une adresse broadcast MAC globale soient retransmises au réseau à grande distance.

4. Dispositif selon l'une quelconque des revendications 1 à 3, **caractérisé en ce que** la commande est conçue de façon à ce que l'adresse MAC respectivement associée à l'émetteur des trames venant du réseau à grande distance ainsi que l'adresse E.164 associée à celle-ci soient sauvegardées dans la mémoire d'adresses.

5. Dispositif selon l'une quelconque des revendications 1 à 4, **caractérisé en ce que** le service sans connexion est un « Switched Multi-megabit Data Service » (SMDS), **en ce que** le réseau à grande distance pour la réalisation de ce service est un « Distributed Queue Dual Bus » (DQDB), **en ce que** du côté du réseau à grande distance, les couches de protocoles : couche de protocole d'interface SMDS 1, 2 et 3 (SIP_1, SIP_2, SIP_3) sont prévues et **en ce que** le dispositif (IWF) est une fonction de conversion, qui du côté du réseau à grande distance communique avec la couche de protocole 3 d'interface SMDS (SIP_3).

6. Dispositif selon l'une quelconque des revendications 1 à 4, **caractérisé en ce que** le service sans connexion est un « Switched Multi-megabit Data Service » (SMDS), **en ce que** le réseau à grande distance pour la réalisation de ce service transmet en mode de transfert asynchrone (ATM), **en ce que** du côté du réseau à grande distance, les couches de protocoles couche physique (PHY), couche en mode de transfert asynchrone (ATM), sous-couche de segmentation et d'assemblage de la couche d'adaptation 3/4 en mode de transfert asynchrone (AAL3/4SAR) et couche de protocole 3 d'interface SMDS (SIP_3) sont prévues et **en ce que** le dispositif (IWF) est une fonction de conversion, qui du côté du réseau à grande distance communique avec la couche de protocole 3 d'interface SMDS (SIP_3).

7. Dispositif selon l'une quelconque des revendications 1 à 4, **caractérisé en ce que** le service sans connexion est un « Connectionless Broadband Data Service » (CBDS), **en ce que** le réseau à grande distance pour la réalisation de ce service transmet en mode de transfert asynchrone (ATM), **en ce que** du côté du réseau à grande distance, les couches de protocoles, couche physique (PHY),couche en mode de transfert asynchrone (ATM), couche d'adaptation au mode de transfert asynchrone 3/4 (AAL3/4) et couche de protocole d'accès au réseau sans connexion (CLNAP) sont prévues et **en ce que** le dispositif (IWF) est une fonction de conversion, qui du côté du réseau à grande distance communique avec la couche de protocole d'accès au réseau sans connexion (CLNAP).

8. Dispositif selon l'une quelconque des revendications 1 à 7, **caractérisé en ce que** du côté d'ELAN, les couches de protocoles, couche physique (PHY), couche en mode de transfert asynchrone (ATM), couche d'adaptation 5 au mode de transfert asynchrone (AAL5) et couche de client à émulation LAN (LEC) sont prévues, **en ce que** le dispositif (IWF) est une fonction de conversion, qui du côté d'ELAN communique avec la couche de client à émulation LAN (LEC).
